# EUROPEAN PATENT APPLICATION

(11) **EP 4 759 441 A1**
(43) Date of publication of application: **17.06.2026**
(21) Application number: 24864324.9
(22) Date of filing: 07.08.2024
(51) Int. Cl.: B05D 7/14, C09D 1/00, C09D 183/06

(54) **SURFACE TREATMENT METHOD FOR METAL OR ALLOY, AND METAL OR ALLOY PRODUCT**

(30) Priority: 15.09.2023 CN 202311191391
(71) Applicant: Fuyao Glass Industry Group Co., Ltd., Fuqing, Fujian 350300 (CN)
(72) Inventor: YANG, Huan, Fuzhou, Fujian 350300 (CN); JIA, Yinghui, Fuzhou, Fujian 350300 (CN); LIU, Xiangwei, Fuzhou, Fujian 350300 (CN); GUO, Shanji, Fuzhou, Fujian 350300 (CN)
(74) Representative: Patentanwälte Olbricht Buchhold Keulertz
(86) International application number: PCT/CN2024/110278
(87) International publication number: WO 2025/055601

(57) **Abstract**

Provided in the present invention are a surface treatment method for a metal or an alloy, and a metal or alloy product. The surface treatment method for a metal or an alloy comprises: forming an organic-inorganic hybrid layer on a surface of an anodic oxidation layer located on at least one surface of a metal or an alloy, wherein the organic-inorganic hybrid layer contains silicon dioxide as a main component, and also contains carbon-containing groups that fill in a spatial network structure formed by the silicon dioxide. At least one surface of the metal or alloy product has an anodic oxidation layer and an organic-inorganic hybrid layer, wherein the organic-inorganic hybrid layer contains silicon dioxide as a main component, and carbon-containing groups that function as a filling in silicon dioxide. In the technical solution provided in the present invention, by forming the organic-inorganic hybrid layer on a surface of the anodic oxidation layer, good corrosion resistance, extremely high hardness and good car washing resistance can be provided, and the requirements of all automotive original equipment manufacturers in the current market can be met.

## Description

### CROSS-REFERENCE TO RELATED APPLICATIONS

The present application claims priority to Chinese Patent Application No. 202311191391.5, filed with the State Intellectual Property Office of China on September 15, 2023 and entitled "SURFACE TREATMENT METHOD FOR METAL OR ALLOY, AND METAL OR ALLOY PRODUCT", the content of which is incorporated herein by reference in its entirety.

### TECHNICAL FIELD

The present invention relates to a surface treatment method for metal or alloy and a metal or alloy product, pertaining to the technical field of metal and alloy treatment.

### BACKGROUND ART

Aluminum alloy decorative strips, owing to their unique surface metallic texture and low material density, are increasingly used for automotive exterior parts and strongly favored by a vast number of car owners, especially high-end customers. Due to their material properties, aluminum alloy decorative strips cannot be directly used as automotive exterior parts unless their surfaces have been subjected to surface treatment. The surface-treated aluminum alloy decorative strips have more diverse and personalized appearances, and show significantly improved surface hardness and corrosion resistance. Currently, commonly used surface treatment methods for aluminum alloy decorative strips include anodic oxidation, baking paint, powder spraying, and the like.

For automotive exterior parts, long-term maintenance of their decorative effect under various operating conditions is the most basic requirement. At present, after anodic oxidation, the surface of aluminum alloy undergoes conventional chemical sealing, which significantly improves its surface hardness and corrosion resistance, meeting the needs of a considerable number of customers. However, as high-end customers have increasingly higher requirements on decorative parts, especially with the use of strong alkaline car washing liquids and automatic car washes, the anodized products by the traditional process at pH 12.5 or pH 13.0 are prone to corrosion or scratching, resulting in loss of surface luster, whitening, alteration, and other issues, thereby losing their decorative effect.

In order to improve the corrosion resistance, especially to meet the demand for alkali resistance at a pH of 13.5 or higher, the anodic electrophoresis technology has been applied in recent years. The process comprises depositing by electrophoresis a layer of polyacrylate-based coating on the surface of the anodized layer. Such a coating is an organic coating with excellent corrosion resistance, but has obvious shortcomings: for customers, its hardness is not high enough to give a satisfactory performance in the car wash resistance test with high requirements; and for the production side, since it is an organic coating with strong corrosion resistance, paint stripping and rework of products as well as paint stripping of hangers incur enormous costs.

### SUMMARY OF THE INVENTION

To solve the above technical problems, the objective of the present invention is to provide a surface treatment method for metal or alloy and a metal or alloy product. The method forms an organic-inorganic hybrid layer on the surface of an anodized layer, thereby satisfying the requirements for corrosion resistance and car wash resistance of exterior parts products, while reducing the manufacturing cost of the products.

To solve the above technical problems, the present invention first provides a surface treatment method for metal or alloy, comprising forming an organic-inorganic hybrid layer on the surface of an anodized layer on at least one surface of the metal or alloy;
wherein the organic-inorganic hybrid layer contains silicon dioxide as the main component, and also contains carbon-containing groups filled in the spatial network structure formed by silicon dioxide.

The present invention also provides a metal or alloy product, which has on at least one surface thereof an anodized layer and an organic-inorganic hybrid layer, wherein the organic-inorganic hybrid layer is formed on the surface of the anodized layer;
wherein the organic-inorganic hybrid layer contains silicon dioxide as the main component, and also contains carbon-containing groups filled in the spatial network structure formed by silicon dioxide.

According to a specific embodiment of the present invention, preferably, the carbon-containing groups include one or a combination of two or more of an epoxy group, an alkyl group, an alkenyl group, an alkynyl group, and an aryl group, more preferably an epoxy group and/or an alkyl group.

According to a specific embodiment of the present invention, the present invention uses an anodized layer as a substrate to form an organic-inorganic hybrid layer thereon. The provided organic-inorganic hybrid layer comprises a main structure with silicon dioxide as the main component. Preferably, the mass ratio of Si element to C element in the organic-inorganic hybrid layer is 0.33-4.3. It was discovered in the research for the present invention that by controlling the ratio of the silicon-containing component to the carbon-containing component in the organic-inorganic hybrid layer within the above range, on one hand, the content of silicon dioxide can be kept within an appropriate range, such that problems caused by excessive silicon dioxide, such as difficulty in film formation or poor film-forming properties in the manufacturing process, can be avoided, and quality-related problems such as easy cracking of the film layer can be prevented; on the other hand, the content of carbon-containing groups can be kept within an appropriate range, such that the adverse impact on the hardness of the film layer by excessive carbon-containing groups filling the main structure of silicon dioxide can be avoided. The organic-inorganic hybrid layer thus obtained has excellent corrosion resistance as well as extremely high hardness and scratch resistance, and can have the characteristics of easily forming a film and being not easy to crack while having extremely high hardness. The mass ratio of Si element to C element in the organic-inorganic hybrid layer is more preferably 0.42-3.7, and even more preferably 0.58-2.6. Within the range of the mass ratio of Si element to C element according to the present invention, the specific mass ratio in the organic-inorganic hybrid layer may be controlled as needed, for example, controlled to be 0.42-1.9, 0.58-1.2, 2.6-3.7, and the like.

According to a specific embodiment of the present invention, preferably, the organic-inorganic hybrid layer is formed from oligomers generated by dehydration condensation of two or more organooxysilanes (which contain an alkoxy group, an aryloxy group, an acyloxy group, and/or an alkyl carbonyl group).

According to a specific embodiment of the present invention, preferably, the organooxysilane includes at least one or a combination of two or more of dialkoxysilanes, trialkoxysilanes, and tetraalkoxysilanes.

According to a specific embodiment of the present invention, preferably, at least one of the two or more organooxysilanes forming the oligomers contains an epoxy group. More preferably, the epoxy-containing organooxysilane(s) includes one or a combination of two or more of 3-(2,3-glycidoxy)propyltrimethoxysilane, 3-(2,3-glycidoxy)propylmethyldimethoxysilane, 3-(2,3-glycidoxy)propyltriethoxysilane, 2-(3,4-epoxycyclohexyl)ethyltrimethoxysilane, 2-(3,4-epoxycyclohexyl)ethylmethyldimethoxysilane, and the like.

According to a specific embodiment of the present invention, preferably, at least one of the two or more organooxysilanes forming the oligomers is free from an epoxy group. More preferably, the epoxy-free organooxysilane includes a compound represented by general formula RₐSiX₍₄₋ₐ₎, wherein a is 0-3, R represents a non-hydrolyzable group selected from an alkyl group, an alkenyl group, an alkynyl group, and an aryl group; and X represents a hydrolyzable group selected from an alkoxy group, an aryloxy group, an acyloxy group, and an alkyl carbonyl group. Specifically, the epoxy-free organooxysilane includes one or a combination of two or more of methyltrimethoxysilane, tetraethoxysilane, tetramethoxysilane, tetraacetoxysilane, methylphenyldimethoxysilane, dimethoxydiacetoxysilane, diethyldiacetoxysilane, di-tert-butyloxydiacetoxysilane, diethoxydiphenylsilane, and trimethylphenoxysilane.

The present invention preferably uses at least one epoxy-containing organooxysilane and at least one epoxy-free organooxysilane to form oligomers. This combination offers the following advantages: 1) the epoxy group can improve the compactness of the coating, thereby improving the salt spray resistance and alkali resistance. Meanwhile, the epoxy group can also strengthen the bonding between the coating and the anodized surface that has been immersion-cleaned in water at 80°C-98°C for 1-10 minutes. It has been found in practical production that if the anodized layer is not immersion-cleaned in water at 80°C-98°C, the workpiece is highly prone to scratches by hands, gloves, or other objects in contact with the workpiece during the transfer process, thereby affecting the aesthetic appearance. Experiments showed that by introducing an epoxy-containing organooxysilane and controlling its content in the system, the coating and the anodized surface immersion-cleaned in hot water can be more tightly bonded, and the corrosion resistance of the product is improved. 2) Addition of at least one epoxy-free organooxysilane can provide the basic film structure of silicon dioxide, so as to ensure the key properties of the coating, such as high hardness.

According to a specific embodiment of the present invention, preferably, the organic-inorganic hybrid layer has a thickness of 0.5 µm-5 µm. When the mass ratio of Si element to C element in the organic-inorganic hybrid layer is 0.42-1.9, the corresponding organic-inorganic hybrid layer preferably has a thickness of 3 µm-5 µm; and when the mass ratio of Si element to C element in the organic-inorganic hybrid layer is 2.6-3.7, the corresponding organic-inorganic hybrid layer preferably has a thickness of 0.5 µm-2.6 µm.

According to a specific embodiment of the present invention, preferably, the organic-inorganic hybrid layer is prepared by a coating method, for example, a common coating method such as dip coating, spray coating, roll coating, brush coating, and spin coating.

According to a specific embodiment of the present invention, preferably, the metal is aluminum or iron, and the alloy is an aluminum alloy or stainless steel.

According to a specific embodiment of the present invention, preferably, the anodized layer has a thickness of 2 µm-10 µm, more preferably 4 µm-7 µm.

According to a specific embodiment of the present invention, the anodized film layer can be obtained through a conventional process. Moreover, after the anodized layer is obtained, it is first immersion-cleaned in water at 80°C-98°C for 1-10 minutes. In actual production, after the anodic oxidation treatment, the workpiece needs to be transferred from the fixtures of the oxidation line to the fixtures of the spray coating line. If the anodized layer is not immersion-cleaned in water at 80°C-98°C, the workpiece is highly prone to scratches by hands, gloves, or other objects in contact with the workpiece during the transfer process, thereby affecting the aesthetic appearance. After the immersion cleaning in water at 80°C-98°C, on one hand, the residual acid in the pores of the anodized film can be cleaned more thoroughly; and on the other hand, more importantly, the scratch resistance of the oxide film layer can be improved, making the workpiece easier to handle during the transfer process.

According to a specific embodiment of the present invention, preferably, the metal or alloy product provided according to the present invention is an exterior decorative part.

According to a specific embodiment of the present invention, preferably, the exterior decorative part is a high-hardness scratch-resistant aluminum alloy exterior decorative part product.

The corrosion resistance of the aluminum alloy exterior decorative part product provided according to the present invention can meet the following requirements: resistance to immersion in an acid solution having pH=1.0 for 10 minutes, preferably for 1 hour, and more preferably for 24 hours; resistance to immersion in an alkaline solution having pH=13.5 for 10 minutes, preferably for 1 hour, and more preferably for 2 hours.

The surface of the aluminum alloy exterior decorative part product provided according to the present invention has a pencil hardness of >5H, and more preferably >6H.

The car wash resistance of the aluminum alloy exterior decorative part product provided according to the present invention can meet the following requirement: a 60° gloss retention rate of >90%, and more preferably 95%, as per the car wash resistance test specified in the DIN EN ISO 20566 (2013) standard.

According to a specific embodiment of the present invention, preferably, the exterior decorative part is an automotive exterior decorative part.

The technical solution provided by the present invention can provide excellent corrosion resistance, extremely high hardness, and exceptionally outstanding car wash resistance by forming the organic-inorganic hybrid layer on the surface of the anodized layer, thus meeting the requirements by all automotive original equipment manufacturers in the current market.

### BRIEF DESCRIPTION OF DRAWINGS

Figure 1 is a schematic representation of a specific embodiment of the high-hardness scratch-resistant aluminum alloy exterior decorative part product provided according to the present invention.
Figure 2 shows the energy spectrum test results of a first type of organic-inorganic hybrid layer.
Figure 3 shows the energy spectrum test results of a second type of organic-inorganic hybrid layer.
Figure 4 shows the film cracking status of organic-inorganic hybrid layers with different Si/C mass ratios.
Figure 5 shows the appearances of organic-inorganic hybrid layers with different Si/C mass ratios.
Figure 6 shows the car wash test results of different products.

### DETAILED DESCRIPTION OF EMBODIMENTS

In order to provide a better understanding of the technical features, objectives, and beneficial effects of the present invention, the technical solutions of the present invention will now be described in detail below, but the detailed description shall not be construed as limiting the implementable scope of the present invention.

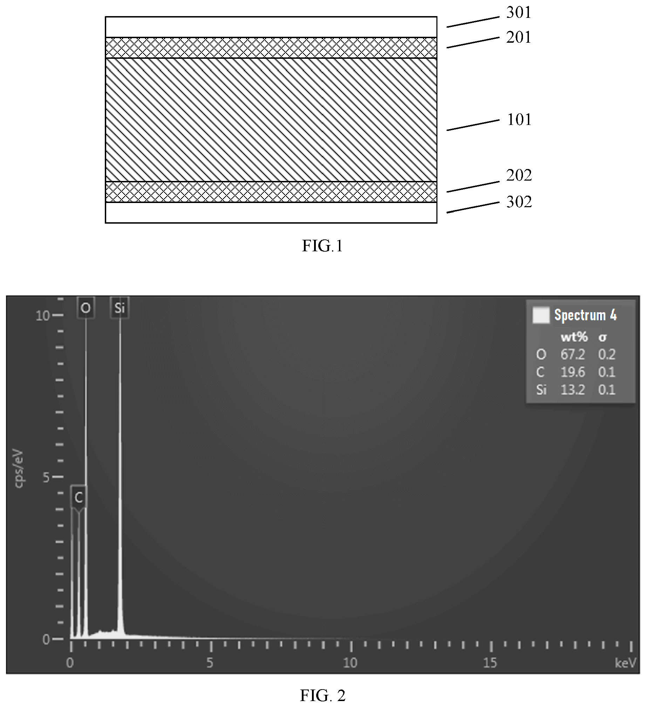

The structure of a specific embodiment of the high-hardness scratch-resistant aluminum alloy exterior decorative part product provided according to the present invention is shown in Figure 1. This aluminum alloy exterior decorative part product includes an aluminum substrate 101, anodized layers 201 and 202 provided respectively on the two surfaces of the aluminum substrate 101, and organic-inorganic hybrid layers 301 and 302 provided respectively on the surfaces of the two anodized layers 201 and 202.

### Example 1

Organic-inorganic hybrid layers with different Si/C mass ratios were prepared on the surface of an aluminum alloy substrate by coating as described below.

### (1) First type of organic-inorganic hybrid layer

A first type of organic-inorganic hybrid layer was formed from oligomers generated by dehydration condensation of organooxysilanes. The organooxysilanes used were 3-(2,3-glycidoxy)propyltrimethoxysilane and methyltrimethoxysilane, in a mass ratio of 1.74. The silanes would produce methanol, ethanol, or the like during hydrolysis, and the methanol and ethanol would volatilize from the system after processings such as heating and curing, which is equivalent to decarbonization.

The first type of organic-inorganic hybrid layer had a Si:C mass ratio of 0.67, and had an energy spectrum shown in Figure 2.

The first type of organic-inorganic hybrid layer had a thickness of 3 µm-5 µm.

### (2) Second type of organic-inorganic hybrid layer

A second type of organic-inorganic hybrid layer was formed from oligomers generated by dehydration condensation of organooxysilanes. The organooxysilanes used were 3-(2,3-glycidoxy)propyltriethoxysilane and tetraethoxysilane, in a mass ratio of 0.16.

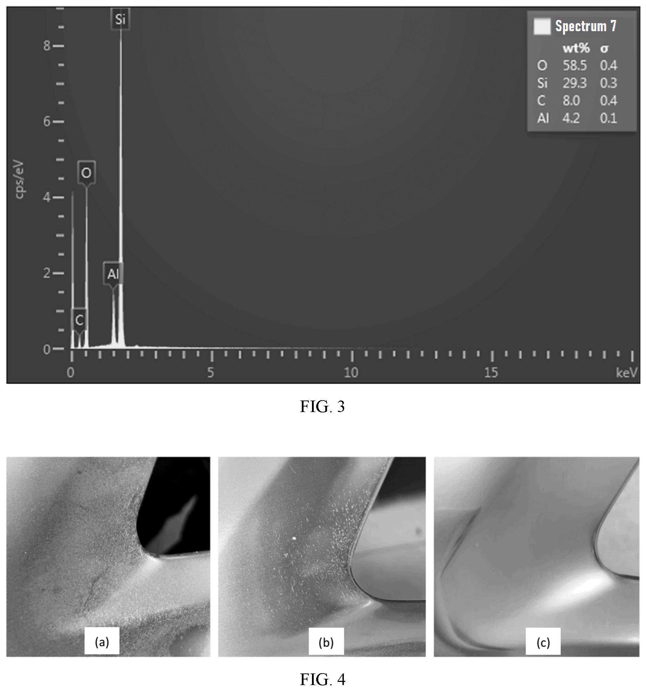

The second type of organic-inorganic hybrid layer had a Si:C mass ratio of 3.66, and had an energy spectrum shown in Figure 3.

The second type of organic-inorganic hybrid layer had a thickness of 0.5 µm-1.5 µm.

It can be seen from Figure 2 that the first type of organic-inorganic hybrid layer had a Si:C ratio of 0.67, with a high content of organic components, and can be made thick while ensuring the film quality meets the product appearance requirements.

It can be seen from Figure 3 that the second type of organic-inorganic hybrid layer had a Si:C ratio of 3.66, with a much lower content of organic components as compared to the first type of organic-inorganic hybrid layer, and can only be made relatively thin while ensuring the film quality meets the product appearance requirements. Therefore, it can be observed that the electron beam can penetrate the second type of organic-inorganic hybrid layer, and the signal of the Al element in the substrate can be detected.

The organic-inorganic hybrid layers above were tested for the pencil hardness, acid resistance, alkali resistance, and the like, wherein the tests for the acid resistance and alkali resistance were carried out as follows.

In a standard environment, the aluminum alloy parts with an organic-inorganic hybrid layer applied on their surface were each placed and immersed in an acid solution or alkali solution at a specific pH. During this process, the test piece of 30 mm-50 mm was kept immersed in the test solution; and at regular intervals, the sample was taken out and observed. If there were no defects such as blistering or peeling from the substrate surface, the sample was considered qualified and the test was continued. The time to the last test showing "qualified" was recorded as the acid resistance duration or alkali resistance duration.

The test results are shown in Table 1 below:

**Table 1**

| | Pencil Hardness | Acid Resistance (pH=1) | Alkali Resistance (pH=13.5) |
|---|---|---|---|
| First type of organic-inorganic hybrid layer | 6H | 36h | 2.5h |
| Second type of organic-inorganic hybrid layer | 7H | 48h | 2.1h |

It can be seen from the results in Table 1 that the organic-inorganic hybrid layers formed in Example 1 have high hardness and acid and alkali resistance, and can provide good protection for the surface of the aluminum alloy substrate.

### Example 2

Organic-inorganic hybrid layers with different Si/C mass ratios were prepared on the surface of an aluminum alloy substrate by coating, and the cracking of the coating was observed, wherein the test results are shown in Figure 4.

When the Si:C mass ratio in the coating was too high, especially when the Si:C was 10 or more, it was difficult to form a film with the coating; even if a film was formed, it was prone to cracking during the curing of the coating. As shown in Figure 4(a), the third type of organic-inorganic hybrid layer was formed from oligomers obtained by dehydration condensation of organooxysilanes which were 3-(2,3-glycidoxy)propyltrimethoxysilane and tetramethoxysilane in a ratio of 0.05. The third type of organic-inorganic hybrid layer had a Si:C mass ratio of 12.35, and the entire front surface of the film layer showed cracks, making it impossible to test the film thickness.

When the Si:C mass ratio in the coating was reduced to the range of >5, cracks still occurred in certain parts of the product (especially in relatively thick areas in the film formed during spraying due to the product structure). As shown in Figure 4(b), the fourth type of organic-inorganic hybrid layer was formed from oligomers obtained by dehydration condensation of organooxysilanes which were 3-(2,3-glycidoxy)propyltrimethoxysilane and tetramethoxysilane in a ratio of 0.1. The fourth type of organic-inorganic hybrid layer had a Si:C mass ratio of 6.28. In normal areas without film cracking, the film thickness was 0.8 µm to 1.2 µm, while in areas where cracks occurred, the film thickness was 1.6 µm to 2.1 µm.

When the Si:C mass ratio in the coating was within the appropriate range required by the present invention (i.e. Si:C = 0.33-4.3), appearance-related problems such as cracking can be avoided, and products with an excellent appearance can be obtained. As shown in Figure 4(c), the fifth type of organic-inorganic hybrid layer was formed from oligomers obtained by dehydration condensation of organooxysilanes which were 3-(2,3-glycidoxy)propyltrimethoxysilane and tetramethoxysilane in a ratio of 2.2. The fifth type of organic-inorganic hybrid layer had a Si:C mass ratio of 0.67, and had a film thickness of 3 µm to 5 µm.

### Example 3

Organic-inorganic hybrid layers with different Si/C mass ratios were prepared on the surface of an aluminum alloy substrate by coating, and the appearance of the coating was observed.

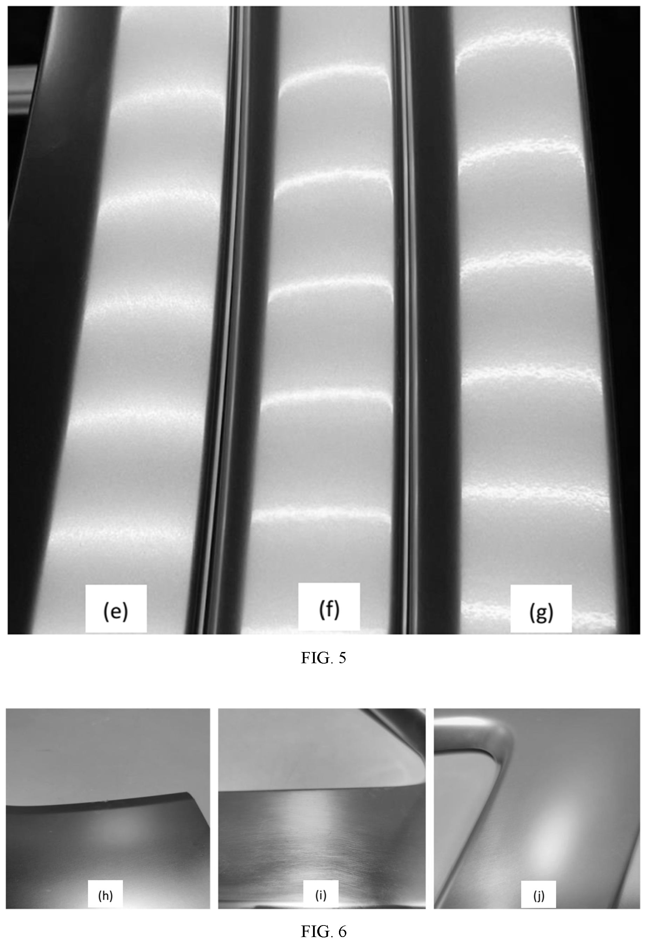

Figure 5 shows the appearance of organic-inorganic hybrid layers with different Si/C mass ratios under the light of a strip inspection lamp. The difference in the appearance quality of the products can be seen through the reflection of the light strips on the product.

Figure 5(e) shows the appearance of a product surface without a coating, with blurred light and shadow.

Figures 5(f) and 5(g) show the appearance of the products whose surface was coated with an organic-inorganic hybrid layer, wherein
in Figure 5(f) the sixth type of organic-inorganic hybrid layer was formed from oligomers obtained by dehydration condensation of organooxysilanes which were 3-(2,3-glycidoxy)propyltrimethoxysilane and tetramethoxysilane in a ratio of 0.28. The sixth type of organic-inorganic hybrid layer had a Si:C mass ratio of 2.6, and had a film thickness of 2.3 µm to 2.6 µm. As can be seen from Figure 5(f), the light and shadow of the lamp are clear, and the coating has an excellent appearance;
in Figure 5(g) the seventh type of organic-inorganic hybrid layer was formed from oligomers obtained by dehydration condensation of organooxysilanes which were 3-(2,3-glycidoxy)propyltrimethoxysilane and methyltrimethoxysilane in a ratio of 5. The seventh type of organic-inorganic hybrid layer had a Si:C mass ratio of 0.4, and had a film thickness of 3.4 µm to 4.2 µm. As can be seen from Figure 5(g), the light and shadow of the lamp show a significant orange peel texture, and the appearance is poor, which cannot meet the requirements by high-end customers on exterior decorative parts.

### Example 4

Organic-inorganic hybrid layers with different Si/C mass ratios were prepared on the surface of an aluminum alloy substrate by coating, and a car wash test was conducted. The test results are shown in Table 2.

Figure 6 shows the appearance after testing in accordance with the car wash resistance test specified in the DIN EN ISO 20566 (2013) standard.

Figure 6(h) shows a product processed by the traditional process at pH=13.0, which was subjected to Ni sealing and silicate sealing, and had no surface coating, with an anodized film layer as the outermost layer which had high hardness and scratch resistance. As can be seen in Figure 6(h), the surface after the car wash test had only slight scratches, but the disadvantage is that it cannot pass the alkali resistance test after the car wash test.

Figure 6(i) shows a product processed by the anodic electrophoresis process at pH=13.5. Through electrophoresis, a layer of acrylic resin coating was attached to the surface of the anodized layer, but had poor hardness. As can be seen in Figure 6(i), the surface after the car wash test had severe scratches, and the scratched coating also showed rainbow luster when viewed from the side, which is unacceptable for exterior decorative part products.

Figure 6(j) shows a product of the present invention, having the first type of organic-inorganic hybrid layer in Example 1 on the surface thereof. The first type of organic-inorganic hybrid layer had a Si:C mass ratio of 0.67, and has a thickness of 3 µm to 5 µm. As can be seen in Figure 6(j), the surface after the car wash test had only slight scratches, and the product can still meet the performance requirements such as alkali resistance after the car wash test.

**Table 2. Car Wash Test Data of Different Products**

| Product type | 60° gloss | | | Alkali resistance test after car wash |
|---|---|---|---|---|
| | Before Car Wash Test | After Car Wash Test | Gloss Retention Rate | |
| Product after traditional process at pH | 275 | 262 | 95.3% | Qualified |
| 13.0 | | | | |
| Product after anodic electrophoresis at pH 13.5 | 254 | 195 | 76.8% | Unqualified |
| Product of the present invention | 272 | 262 | 96.3% | Qualified |

### Test Methods:

1) Content: The Si:C mass ratio in the organic-inorganic hybrid layer was determined by SEM & EDS (Scanning Electron Microscope and Energy Dispersive Spectrometer, Model: Zeiss Super 55).
2) Film thickness: film thickness data were obtained by observing the cross-section of the organic-inorganic hybrid layer by SEM & EDS (Scanning Electron Microscope and Energy Dispersive Spectrometer, Model: Zeiss Super 55), and precisely measuring the film thickness on the obtained cross-sectional image.
3) Car wash test: The test was performed in accordance with the car wash resistance test specified in the DIN EN ISO 20566 (2013) standard, and the gloss data of the test piece after 10 car wash cycles was measured.
4) Gloss measurement: A gloss meter (Model: BYK4586) was used to determine the gloss of the test piece at an angle of 60°.
5) Alkali resistance test: At room temperature, a) The product by the traditional process at pH 13.0 was immersed in an alkali solution at pH=13.0 for 10 minutes, and the surface corrosion was observed, in which case corrosion and whitening were regarded unacceptable; b) The product by the anodic electrophoresis at pH 13.5 and the product of the present invention were immersed in an alkali solution at pH=13.5 for 10 minutes, and the surface corrosion was observed, in which case corrosion and whitening were regarded unacceptable. In the alkali resistance test, the occurrence of corrosion or whitening was regarded as unqualified, and the absence of corrosion or whitening was regarded as qualified. Preparation of alkali solution at pH=13.0: 4.0 g of NaOH, 4.64 g of Na₃PO₄·12H₂O, and 0.33 g of NaCl were dissolved in 1 L of deionized water. Preparation of alkali solution at pH=13.5: 12.7 g of NaOH, 4.64 g of Na₃PO₄·12H₂O, and 0.33 g of NaCl were dissolved in 1 L of deionized water.

## Claims

1. A surface treatment method for metal or alloy, comprising forming an organic-inorganic hybrid layer on the surface of an anodized layer on at least one surface of the metal or the alloy;
wherein the organic-inorganic hybrid layer contains silicon dioxide as the main component and also contains carbon-containing groups filled in the spatial network structure formed by silicon dioxide.

2. The surface treatment method according to claim 1, wherein the carbon-containing group includes one or a combination of two or more of an epoxy group, an alkyl group, an alkenyl group, an alkynyl group, and an aryl group.

3. The surface treatment method according to claim 2, wherein the carbon-containing group is an epoxy group and/or an alkyl group.

4. The surface treatment method according to claim 1, wherein the mass ratio of Si element to C element in the organic-inorganic hybrid layer is 0.33-4.3.

5. The surface treatment method according to claim 4, wherein the mass ratio of Si element to C element in the organic-inorganic hybrid layer is 0.42-3.7.

6. The surface treatment method according to claim 5, wherein the mass ratio of Si element to C element in the organic-inorganic hybrid layer is 0.58-2.6.

7. The surface treatment method according to any one of claims 1-6, wherein the organic-inorganic hybrid layer is formed from oligomers generated by dehydration condensation of two or more organooxysilanes.

8. The surface treatment method according to claim 7, wherein at least one of the organooxysilanes contains an epoxy group.

9. The surface treatment method according to claim 7 or 8, wherein at least one of the organooxysilanes does not contain an epoxy group.

10. The surface treatment method according to any one of claims 7-9, wherein the organooxysilanes include at least one or a combination of two or more of dialkoxysilanes, trialkoxysilanes, and tetraalkoxysilanes.

11. The surface treatment method according to claim 8, wherein the organooxysilane containing an epoxy group includes one or a combination of two or more of 3-(2,3-glycidoxy)propyltrimethoxysilane, 3-[(2,3)-glycidoxy]propylmethyldimethoxysilane, 3-(2,3-glycidoxy)propyltriethoxysilane, 2-(3,4-epoxycyclohexyl)ethyltrimethoxysilane, and 2-(3,4-epoxycyclohexyl)ethylmethyldimethoxysilane.

12. The surface treatment method according to claim 9, wherein the organooxysilane not containing an epoxy group includes a compound represented by general formula RₐSiX₍₄₋ₐ₎, wherein a is 0 to 3, R represents a non-hydrolyzable group selected from an alkyl group, an alkenyl group, an alkynyl group, and an aryl group; and X represents a hydrolyzable group selected from an alkoxy group, an aryloxy group, an acyloxy group, and an alkyl carbonyl group.

13. The surface treatment method according to claim 12, wherein the organooxysilane not containing an epoxy group includes one or a combination of two or more of methyltrimethoxysilane, tetraethoxysilane, tetramethoxysilane, tetraacetoxylsilane, methylphenyldimethoxysilane, dimethoxydiacetoxysilane, diethyldiacetoxysilane, di-tert-butyloxydiacetoxysilane, diethoxydiphenylsilane, and trimethylphenoxysilane.

14. The surface treatment method according to any one of claims 1-13, wherein the organic-inorganic hybrid layer has a thickness of 0.5 µm to 5 µm.

15. The surface treatment method according to claim 14, wherein the organic-inorganic hybrid layer has a thickness of 1 µm to 3 µm.

16. The surface treatment method according to any one of claims 1-15, wherein the metal is aluminum or iron, and the alloy is an aluminum alloy or stainless steel.

17. The surface treatment method according to any one of claims 1-16, wherein the anodized layer has a thickness of 2 µm to 10 µm.

18. The surface treatment method according to claim 17, wherein the anodized layer has a thickness of 4 µm to 7 µm.

19. A metal or alloy product, which has, on at least one surface thereof, an anodized layer and an organic-inorganic hybrid layer, wherein the organic-inorganic hybrid layer is formed on the surface of the anodized layer;
wherein the organic-inorganic hybrid layer contains silicon dioxide as the main component and also contains carbon-containing groups filled in the spatial network structure formed by silicon dioxide.

20. The metal or alloy product according to claim 19, wherein the carbon-containing group includes one or a combination of two or more of an epoxy group, an alkyl group, an alkenyl group, an alkynyl group, and an aryl group.

21. The metal or alloy product according to claim 20, wherein the carbon-containing group is an epoxy group and/or an alkyl group.

22. The metal or alloy product according to claim 19 or 20, wherein the mass ratio of Si element to C element in the organic-inorganic hybrid layer is 0.33-4.3.

23. The metal or alloy product according to claim 22, wherein the mass ratio of Si element to C element in the organic-inorganic hybrid layer is 0.42-3.7.

24. The metal or alloy product according to claim 23, wherein the mass ratio of Si element to C element in the organic-inorganic hybrid layer is 0.58-2.6.

25. The metal or alloy product according to any one of claims 19-24, wherein the organic-inorganic hybrid layer is formed from oligomers generated by dehydration condensation of two or more organooxysilanes.

26. The metal or alloy product according to claim 25, wherein at least one of the organooxysilanes contains an epoxy group.

27. The metal or alloy product according to claim 25 or 26, wherein at least one of the organooxysilanes does not contain an epoxy group.

28. The metal or alloy product according to any one of claims 25-27, wherein the organooxysilanes include at least one or a combination of two or more of dialkoxysilanes, trialkoxysilanes, and tetraalkoxysilanes.

29. The metal or alloy product according to claim 26, wherein the organooxysilane containing an epoxy group includes one or a combination of two or more of 3-(2,3-glycidoxy)propyltrimethoxysilane, 3-[(2,3)-glycidoxy]propylmethyldimethoxysilane, 3-(2,3-glycidoxy)propyltriethoxysilane, 2-(3,4-epoxycyclohexyl)ethyltrimethoxysilane, and 2-(3,4-epoxycyclohexyl)ethylmethyldimethoxysilane.

30. The metal or alloy product according to claim 27, wherein the organooxysilane not containing an epoxy group includes a compound represented by general formula RₐSiX₍₄₋ₐ₎, wherein a is 0 to 3, R represents a non-hydrolyzable group selected from an alkyl group, an alkenyl group, an alkynyl group, and an aryl group; and X represents a hydrolyzable group selected from an alkoxy group, an aryloxy group, an acyloxy group, and an alkyl carbonyl group.

31. The metal or alloy product according to claim 30, wherein the organooxysilane not containing an epoxy group includes one or a combination of two or more of methyltrimethoxysilane, tetraethoxysilane, tetramethoxysilane, tetraacetoxylsilane, methylphenyldimethoxysilane, dimethoxydiacetoxysilane, diethyldiacetoxysilane, di-tert-butyloxydiacetoxysilane, diethoxydiphenylsilane, and trimethylphenoxysilane.

32. The metal or alloy product according to any one of claims 19-31, wherein the organic-inorganic hybrid layer has a thickness of 0.5 µm to 5 µm.

33. The metal or alloy product according to claim 32, wherein the organic-inorganic hybrid layer has a thickness of 1 µm to 3 µm.

34. The metal or alloy product according to any one of claims 19-33, wherein the metal is aluminum or iron, and the alloy is an aluminum alloy or stainless steel.

35. The metal or alloy product according to any one of claims 19-34, wherein the anodized layer has a thickness of 2 µm to 10 µm.

36. The metal or alloy product according to claim 35, wherein the anodized layer has a thickness of 4 µm to 7 µm.

37. The metal or alloy product according to any one of claims 19-36, wherein the metal or alloy product is an exterior decorative part.

38. The metal or alloy product according to claim 37, wherein the exterior decorative part is an automotive exterior decorative part.
